# EUROPEAN PATENT APPLICATION

(11) **EP 4 663 907 A1**
(43) Date of publication of application: **17.12.2025**
(21) Application number: 25178756.0
(22) Date of filing: 26.05.2025
(51) Int. Cl.: F01N 3/20

(54) **DEVICE FOR THE FILTRATION OF A UREA-WATER SOLUTION**

(30) Priority: 11.06.2024 DE 202024103109 U
(71) Applicant: A.L. Filter EAD, 7018 Ruse (BG)
(72) Inventor: IVANOV, Plamen Kolev, 7015 Ruse (BG)
(74) Representative: Kuhnen & Wacker Patent- und Rechtsanwaltsbüro PartG mbB

(57) **Abstract**

The present inventions pertains a device for filtering an urea-water solution in an SCR exhaust gas aftertreatment device for injecting the urea-water solution into an exhaust gas train, the device having a filter housing and a filter (10) which is arranged in an interior of the filter housing. In order to provide a simpler filtration device in which the susceptibility to damage is reduced and the interchangeability of individual components is increased, the present invention is characterised in that a volume compensation foam (12) is arranged between the filter housing and the filter (10), the volume compensation foam (12) being detachably fastened to the filter (10) in such a way that it can be flushed around by the urea-water solution.

## Description

The present invention relates to a device for filtering a urea-water solution in an SCR exhaust gas aftertreatment device for injecting a urea-water solution into an exhaust gas train.

Due to ever stricter emission regulations, today's diesel vehicles are equipped with SCR exhaust gas aftertreatment systems (SCR = Selective Catalytic Reduction) and require the injection of a urea-water solution (HWL) into the exhaust tract of a diesel engine. The HWL hydrolyses to form ammonia (NH₃) and carbon dioxide (CO₂). The ammonia reacts with the harmful nitrogen oxides (NOₓ) contained in the exhaust gas flow to form harmless nitrogen (N₂) and water (H₂O).

The filtration of the HWL is crucial to ensure the efficiency and longevity of the system. Filtration removes impurities and particles from the HWL that could clog or damage downstream nozzles or catalytic converters.

HWL consists mainly of water. After the diesel engine is switched off, the HWL may therefore freeze at low ambient temperatures. The resulting increase in volume generates high pressure within the filtration device, which can damage or destroy its elements.

EP 2489 845 B1 discloses an arrangement provided in the interior of a filter device in which an elastomer membrane is embedded in a frost equalisation foam and protects it from contact with the HWL. The elastomer membrane and frost equalising foam are designed in such a way that their deformation limits the pressure increase within the interior.

Such an arrangement is complex in terms of parts and production technology. In order to protect the frost compensation foam from contact with the HWL, the elastomer membrane must be fitted into a bead of the pump connection housing and an additional sealing element must be provided. When screwing the pump connection housing into the filter housing, there is an additional risk of damage to the flexible elements. Due to the elastomer membrane fitting into the bead of the pump connection housing, the elastomer membrane must always be replaced when the filter is replaced.

An object of the present invention is therefore to provide a simpler filtration device in which the susceptibility to damage is reduced and the interchangeability of individual components is increased.

This problem is solved by a device for filtering a HWL in an SCR exhaust gas aftertreatment device for injecting the HWL into an exhaust gas train according to claim 1. Further improvements are the subject of the dependent claims.

The filtration device according to the invention is characterised by the fact that a volume compensation foam is arranged between a filter housing and a filter in such a way that it can be surrounded by the HWL. This is the first time that it has been possible to overcome the prejudice that direct contact between the HWL and the volume compensation foam is harmful to the latter and must therefore be avoided.

Such a filtration device has a simple design and is safe to install. The volume compensation foam can be attached to the filter in advance in a detachable manner and inserted into the filter housing together with it. Precise fitting is not necessary and the risk of damage during the installation process is minimised. If the volume compensation foam needs to be replaced, the filtration device according to the invention makes it possible for the first time to replace only the volume compensation foam. On the one hand, this makes it possible to avoid time-consuming pre-assembly, including fitting, as well as the alternative replacement of components that do not require replacement. The structure described above intentionally means that the volume compensation foam can be flushed by the urea-water solution. The increase in volume that occurs during freezing therefore acts equally on the volume compensation foam from all sides. In this way, an increase in pressure that is harmful to the components of the filtration device can be counteracted as effectively as possible.

According to a preferred embodiment, the volume compensation foam is a closed-cell foam. This is characterised by the fact that the HWL cannot penetrate into the pores of the foam. In the event of an increase in volume of the freezing HWL, the pores are compressed, whereby the pressure increase within the filtration device can be limited.

Alternatively, the volume compensation foam can be an open-pored foam whose surfaces are sealed or otherwise sealed. Similar to closed-cell foam, the sealing prevents the HWL from entering the pores of the volume compensation foam. An open-pored foam treated in this way can have favourable properties in terms of compensating for the increase in volume of the HWL.

According to a further preferred embodiment, the volume compensation foam consists of ethylene-propylene-diene rubber, known by the abbreviation EPDM. EPDM has a high chemical resistance, is resistant to long-term ageing and is established in many areas, including the automotive sector, primarily as a sealing material. Due to its high resistance to external influences in particular, it is ideally suited for use as a volume compensation foam or as a component thereof.

According to yet a further preferred embodiment, the volume compensation foam is made in one or more pieces. Which variant is advantageous for an individual application depends, for example, on manufacturing aspects.

According to yet a further preferred embodiment, a holder is provided on which the volume compensation foam is mounted. This can be a simple component, for example manufactured using the plastic injection moulding process. This can have springs that engage in correspondingly complementary moulded grooves in the volume compensation foam. Such a design makes it easy to place the volume compensation foam in the intended position.

According to a particularly preferred embodiment, the holder is set up and designed to be positively and detachably connected to the filter. Such a design is particularly advantageous in terms of assembly. The volume compensation foam can first be attached to the holder and then to the filter. Finally, the filter is inserted into the filter housing, whereby the volume compensation foam is automatically placed in the intended position. If only one of the elements of a multi-piece volume compensation foam is to be replaced, the filter is removed from the filter housing, the holder is detached from the filter, the corresponding element of the volume compensation foam is removed and replaced. The holder is then reattached to the filter and this is inserted into the filter housing. An element of the volume compensation foam can therefore be replaced in just a few seconds.

The device according to the invention is explained below with reference to a preferred but not be intended to be a limiting embodiment in the drawing. It shows:
- Fig. 1: a single element of a multi-piece volume compensation foam;
- Fig. 2: a holder;
- Fig. 3: a pre-assembled state in which four elements of the volume compensation foam according to Fig. 1 are attached to the holder according to Fig. 2; and
- Fig. 4: a partially sectioned view of the further pre-assembled state in which the holder and the volume compensation foam are attached to a filter as shown in Fig. 3.

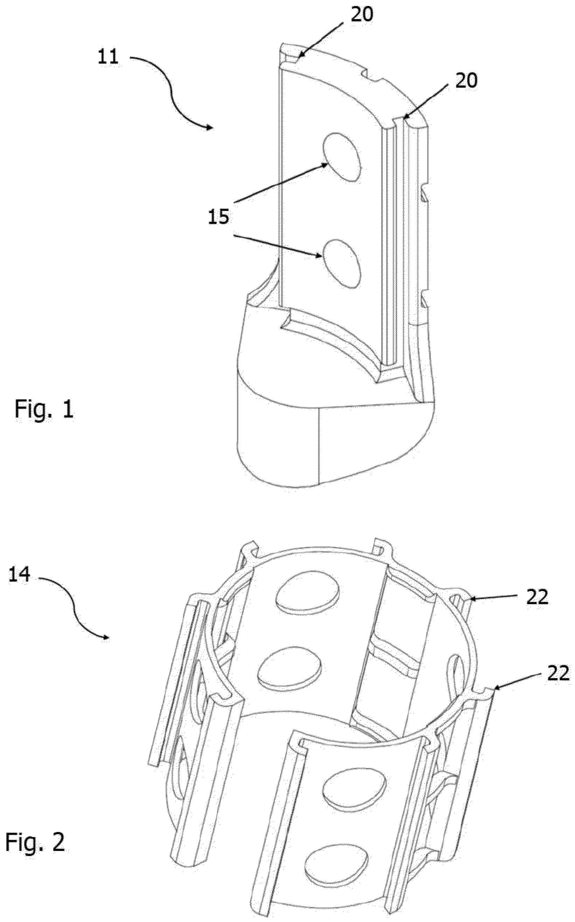

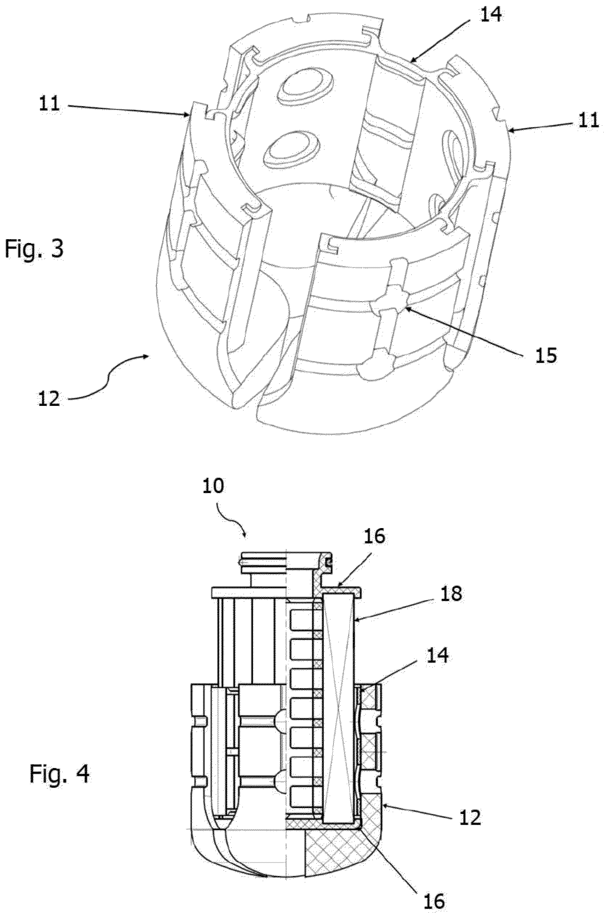

Fig. 1 shows a single element 11 of a multi-piece volume compensation foam 12. The element 11 shown is part of a four-piece volume compensation foam 12 and therefore roughly describes the shape of a quarter circle. Four such elements 11 are distributed equidistantly around a circumference and together form a cylinder. Each element 11 is therefore essentially partially cylindrical in order to be optimally arranged between a cylindrical filter housing not shown and a filter 10 indicated in Fig. 4. In its lower area, the element 11 of the volume compensation foam 12 is tapered and has thicker walls in some sections. The outer contour in this area is also orientated to the inner geometry of the filter housing. As can also be seen with reference to Fig. 4, this section is located below the filter 10 in the assembled state. The design of the volume compensation foam 12 basically follows the aim of occupying as large a volume as possible within the filter housing. On the one hand, this reduces the amount of HWL in the filter 10, which leads to a lower volume expansion of the HWL in the event of freezing. At the same time, the ability of the volume compensation foam 12 to compensate for the increasing volume of the HWL increases. On its longitudinal sides, the element 11 of the volume compensation foam 12 is provided with grooves 20, which serve to attach the element 11 to a holder 14 as described in the following figures.

One such holder 14 is shown in Fig. 2. It is an injection-moulded plastic part that essentially has the shape of an open cylinder. The holder 14 shown has eight springs 22 on its outside, two of which are each arranged for fastening an element 11 of the volume compensation foam 12 and are designed to engage in its grooves 20. In this way, four elements 11 of the volume compensation foam 12 can be mounted on the holder 14.

The pre-assembled state, in which the four elements 11 of the volume compensation foam 12 are attached to the holder, is shown in Fig. 3. As can be seen there, a gap is provided between the individual elements 11 of the volume compensation foam 12. In addition, the holder 14 is open on one side. This design creates a certain flexibility or elasticity, which considerably simplifies subsequent installation on the filter 10 and in the filter housing.

As can also be seen in Fig. 3, the holder 14 and the elements 11 of the volume compensation foam 12 have aligned recesses 15, which ensure that the HWL can evenly flow around the volume compensation foam from all sides. Such a design ensures that the pressure is evenly distributed over all sections of the volume compensation foam 12 in the event of an increase in volume of the HWL in the event of freezing.

Fig. 4 shows a filter 10 to which a volume compensation foam 12 is mounted with the aid of a holder 14. The right half of Fig. 4 shows a cutaway view, while the left half is uncut. In this simplified illustration, the filter 10 consists of a filter carrier 16 and a filter element 18. The holder 14 is designed in such a way that it can be positively connected to a lower section of the filter carrier 16. This enables the filter 10 with pre-mounted volume compensation foam 12 to be mounted securely and quickly in a filter housing.

The assembly of the embodiment shown in the figures consists of the following steps to be carried out in this sequence: Pre-assembly of the elements 11 of the volume compensation foam 12 on the holder 14, attachment of the holder 14 to the filter carrier 16 of the filter 10, insertion of the filter 10 into a filter housing. If individual or all elements 11 of the volume compensation foam 12 are to be replaced, disassembly must be carried out in reverse order.

### List of reference symbols

- 10: Filter
- 11: Element
- 12: Volume compensation foam
- 14: Holder
- 15: Recess
- 16: Filter carrier
- 18: Filter element
- 20: Grooves
- 22: Springs

## Claims

1. Device for filtering an urea-water solution in an SCR exhaust gas aftertreatment device for injecting the urea-water solution into an exhaust gas train, the device having a filter housing and a filter (10) which is arranged in an interior of the filter housing, **characterised in that** a volume compensation foam (12) is arranged between the filter housing and the filter (10), the volume compensation foam (12) being detachably fastened to the filter (10) in such a way that it can be flushed around by the urea-water solution.

2. Device according to claim 1, **characterised in that** the volume compensation foam (12) is arranged at least partially on the radially outer circumference of the filter (10).

3. Device according to claim 1 or 2, **characterised in that** the volume compensation foam (12) is a closed-cell foam or an open-cell foam with surface sealing.

4. Device according to one of claims 1 to 3, **characterised in that** the volume compensation foam (12) consists of ethylene-propylene-diene rubber (EPDM) or contains EPDM.

5. Device according to one of claims 1 to 4, **characterised in that** the volume compensation foam (12) is designed in one piece or in several pieces.

6. Device according to one of claims 1 to 5, **characterised in that** the volume compensation foam (12) is detachably mounted on a holder (14).

7. Device according to claim 6, **characterised in that** the holder (14) can be positively connected to the filter (10).
